# EUROPEAN PATENT APPLICATION

(11) **EP 4 503 154 A1**
(43) Date of publication of application: **05.02.2025**
(21) Application number: 23780067.7
(22) Date of filing: 23.03.2023
(51) Int. Cl.: H01M 4/02, H01M 4/04, H01M 4/13, H01M 4/139

(54) **ELECTRODE PLATE AND ELECTRODE PLATE MANUFACTURING METHOD**

(30) Priority: 28.03.2022 JP 2022051545
(71) Applicant: Panasonic Intellectual Property Management Co., Ltd., Kadoma-shi, Osaka 571-0057 (JP)
(72) Inventor: NISHIKAWA, Kazutaka, Kadoma-shi, Osaka 571-0057 (JP); YOSHINO, Michirou, Kadoma-shi, Osaka 571-0057 (JP); TANIGUCHI, Yasushi, Kadoma-shi, Osaka 571-0057 (JP); NAKAJO, Masahiro, Kadoma-shi, Osaka 571-0057 (JP); KURODA, Masanori, Kadoma-shi, Osaka 571-0057 (JP)
(74) Representative: Eisenführ Speiser
(86) International application number: PCT/JP2023/011582
(87) International publication number: WO 2023/190057

(57) **Abstract**

A first metal foil 200 has a first surface 400 and a second surface 402, a first end 410 and a second end 412 being arranged at ends of the first metal foil 200 in one direction. In a second metal foil 202, a third end 420 and a fourth end 422 are arranged at ends of the second metal foil 202 in the one direction. The second end 412 and the fourth end 422 are aligned, and the second metal foil 202 is stacked on the first surface 400 of the first metal foil 200. A bending point 440 is arranged between a central position 430 and the second end 412, and the first metal foil 200 and the second metal foil 202 are bent at the bending point 440 to place the second surface 402 of the first metal foil 200 in contact. The second surface 402 of the first metal foil 200 is exposed between the first end 410 and the second end 412.

## Description

### TECHNICAL FIELD

The present disclosure relates to an electrode plate comprised of two types of metal foils and a method of manufacturing an electrode plate.

### BACKGROUND ART

A negative electrode current collector in a secondary battery such as a lithium ion battery is manufactured by arranging a lithium foil as a negative electrode active material on a copper foil that is a current collector. For example, the lithium foil and the copper foil are pressure bonded by guiding them through a pressure bonding roller of a weaker force and a pressure bonding roller of a stronger force (see, for example, Patent Literature 1).

### RELATED-ART LITERATURE

### PATENT LITERATURE

Patent Literature 1: JP H3-93156

### SUMMARY OF INVENTION

### TECHNICAL PROBLEM

In a secondary battery such as a lithium-ion battery, the lithium foil may be pressure bonded to both surfaces of the copper foil. In that case, the foils are prone to wrinkles due to a difference in degree of elongation between the lithium foil and the copper foil.

The present disclosure addresses the issue described above, and a purpose thereof is to provide an electrode plate that is difficult to wrinkle.

### SOLUTION TO PROBLEM

An electrode plate according to an embodiment of the present disclosure includes: a first metal foil having a first surface and a second surface facing a direction opposite to that of the first surface, a first end and a second being arranged at ends of the first metal foil in one direction; and a second metal foil in which a third end and a fourth end are arranged at ends of the second metal foil in the one direction. The second end of the first metal foil is aligned with the fourth end of the second metal foil, the second metal foil is stacked on the first surface of the first metal foil, a bending point is arranged between i) a central position between the first end and the second end of the first metal foil and ii) the second end, the first metal foil and the second metal foil are bent at the bending point to place the second surface of the first metal foil in contact, and the second surface of the first metal foil is exposed between the first end and the second end.

Another embodiment of the present disclosure relates to a method of manufacturing an electrode plate. The method includes: forming, given i) a first metal foil having a first surface and a second surface facing a direction opposite to that of the first surface, a first end and a second being arranged at ends of the first metal foil in one direction and ii) a second metal foil in which a third end and a fourth end are arranged at ends of the second metal foil in the one direction, a laminated body in which the second end of the first metal foil is aligned with the fourth end of the second metal foil, and the second metal foil is stacked on the first surface of the first metal foil; and bending, given that a bending point is arranged between i) a central position between the first end and the second end of the first metal foil and ii) the second end, the first metal foil and the second metal foil at the bending point to place the second surface of the first metal foil in contact.

### ADVANTAGEOUS EFFECTS OF INVENTION

According to the present disclosure, it is possible to provide an electrode plate that is difficult to wrinkle.

### BRIEF DESCRIPTION OF DRAWINGS

[Fig. 1] Fig. 1 is a longitudinal sectional view showing a structure of a battery according to embodiment 1.
[Fig. 2] Fig. 2 is a cross-sectional view showing an exemplary structure of the electrode body of Fig. 1.
[Fig. 3] Fig. 3A-3B shows an exemplary configuration of the negative electrode of Fig. 2.
[Fig. 4] Figs. 4A-4E show steps of manufacturing an electrode plate according to embodiment 1.
[Fig. 5] Fig. 5 is a side view showing a structure of a manufacturing apparatus for the manufacturing in Figs. 4B-4C.
[Fig. 6] Figs. 6A-6D show the manufacturing steps of Fig. 4E.
[Fig. 7] Figs. 7A-7E show steps of manufacturing an electrode plate according to embodiment 2.
[Fig. 8] Figs. 8A-8H show a structure of the laminated body of Fig. 7C.

### DESCRIPTION OF EMBODIMENTS

### (Embodiment 1)

Hereinafter, the present disclosure will be described based on preferred embodiments with reference to drawings. The embodiments do not limit the scope of the present disclosure but exemplify the disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes of the parts shown in the drawings are defined for convenience sake to make the explanation easy and shall not be interpreted in a limitative manner unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

Hereinafter, (1) the structure of a battery and (2) the steps of manufacturing an electrode plate will be described in that order.

### (1) Structure of battery

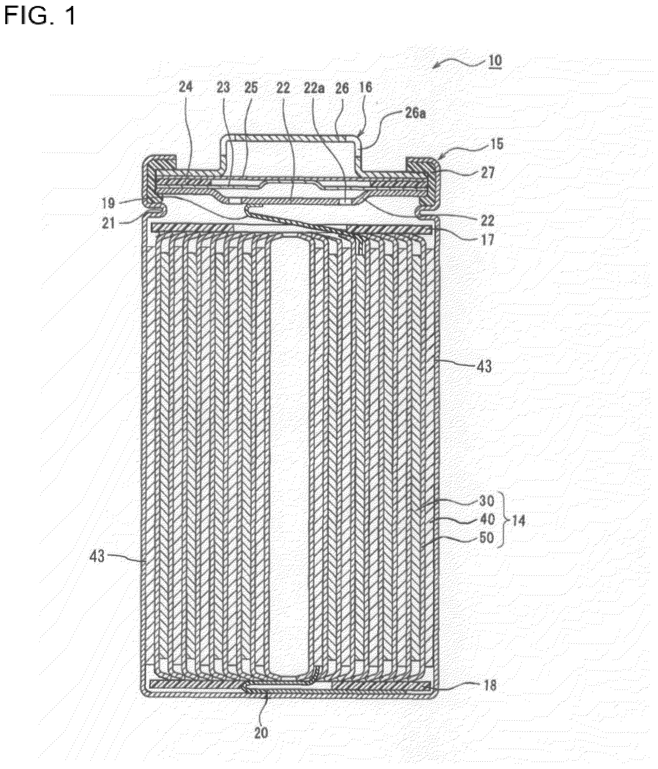

The configuration of a non-aqueous electrolyte secondary battery (hereinafter also referred to as "battery") 10 will be described with reference to Fig. 1. Fig. 1 is a longitudinal sectional view showing a structure of a battery 10. The battery 10 includes a winding-type electrode body 14 in which a positive electrode 30 and a negative electrode 40 are wound in a spiral shape via a separator 50, a non-aqueous electrolyte (not shown), and a metal battery case (casing body) that accommodates the electrode body 14 and the non-aqueous electrolyte. A predetermined amount of non-aqueous electrolyte is injected into the battery case and impregnates the electrode body 14.

The positive electrode 30 and the negative electrode 40 have a structure in which an electrode active material layer is stacked on a current collector. For example, the current collector is comprised of an aluminum foil, etc. in the case of a positive electrode and is comprised of a copper foil, etc. in the case of a negative electrode. The electrode active material layer can be formed by applying an electrode mixture material to the surface of the current collector by a known coating apparatus and drying and rolling the material. The electrode mixture material is obtained by kneading materials including an electrode active material, a binder, a conductive material, etc. in a dispersion medium and uniformly dispersing the materials. For example, the electrode active material is lithium cobalt oxide, lithium iron phosphate, etc. in the case of a positive electrode and is graphite, etc. in the case of a negative electrode.

A case body 15 is, for example, a metal container having a bottomed cylindrical shape. A gasket 27 is provided between the case body 15 and a sealing body 16 to ensure sealing inside the battery case. The case body 15 preferably has an overhang 21 formed by, for example, pressing the side portion of the case body 15 from outside to support the sealing body 16.

The sealing body 16 includes a filter 22 in which a filter opening 22a is formed and a valve body arranged on the filter 22. The valve body blocks the filter opening 22a of the filter 22 and breaks when the internal pressure of the battery 10 increases due to heat generation caused by an internal short circuit, etc. In this embodiment, a lower valve body 23 and an upper valve body 25 are provided to form a valve body, and an insulating member 24 arranged between the lower valve body 23 and the upper valve body 25, and a cap 26 having a cap opening 26a are further provided. Each member constituting the sealing body 16 has, for example, a disk shape or a ring shape, and the members except for the insulating member 24 are electrically connected to each other. Specifically, the filter 22 and the lower valve body 23 are joined to each other at their respective peripheral portions, and the upper valve body 25 and the cap 26 are also joined to each other at their respective peripheral portions. The lower valve body 23 and the upper valve body 25 are connected to each other at the central portions thereof, and the insulating member 24 is interposed between the peripheral portions thereof.

The battery 10 includes an insulating plate 17 and an insulating plate 18 arranged above and below the electrode body 14, respectively. In the example shown in Fig. 1, a positive electrode lead 19 attached to the positive electrode 30 extends to the side of the sealing body 16 via a through hole in the insulating plate 17. For example, the positive electrode lead 19 is connected to the lower surface of the filter 22, which is the bottom plate of the sealing body 16, by welding, etc., and the cap 26, which is the top plate of the sealing body 16 electrically connected to the filter 22, will be a positive electrode terminal. In this embodiment, a current interrupt mechanism (CID) and a gas discharge mechanism (safety valve) are provided in the sealing body 16. It is preferable to provide a gas discharge valve (not shown) at the bottom of the case body 15, too.

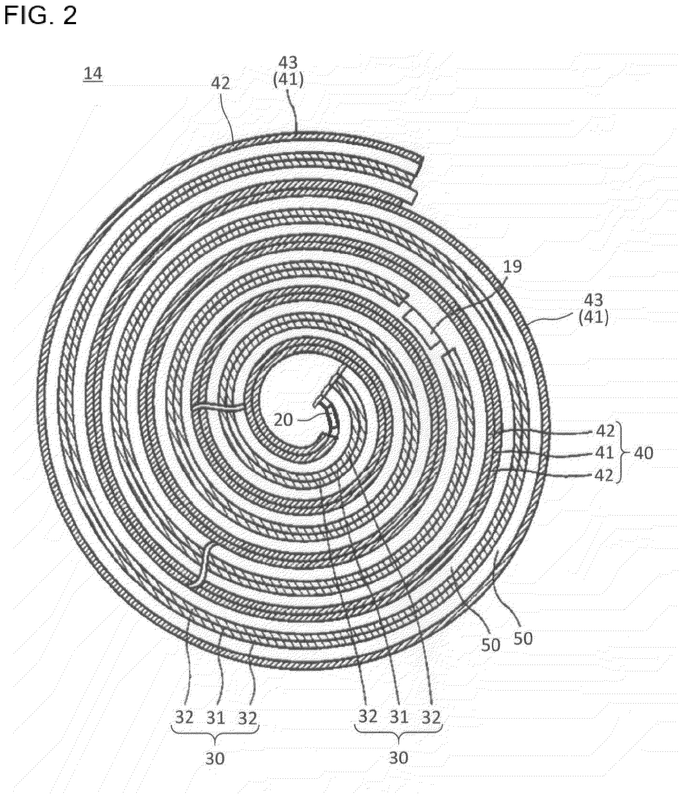

Fig. 2 shows a partial cross-sectional view of the electrode body 14 accommodated in the battery 10. The belt-like positive electrode 30 constituting the electrode body 14 includes a positive electrode current collector 31 (the current collector of the positive electrode), a positive electrode active material layer 32 (the electrode active material layer of the positive electrode) formed on both surfaces of the positive electrode current collector 31, and the positive electrode lead 19. One end of the positive electrode lead 19 is bonded to a region where the positive electrode active material layer 32 is not formed and the positive electrode current collector 31 is exposed.

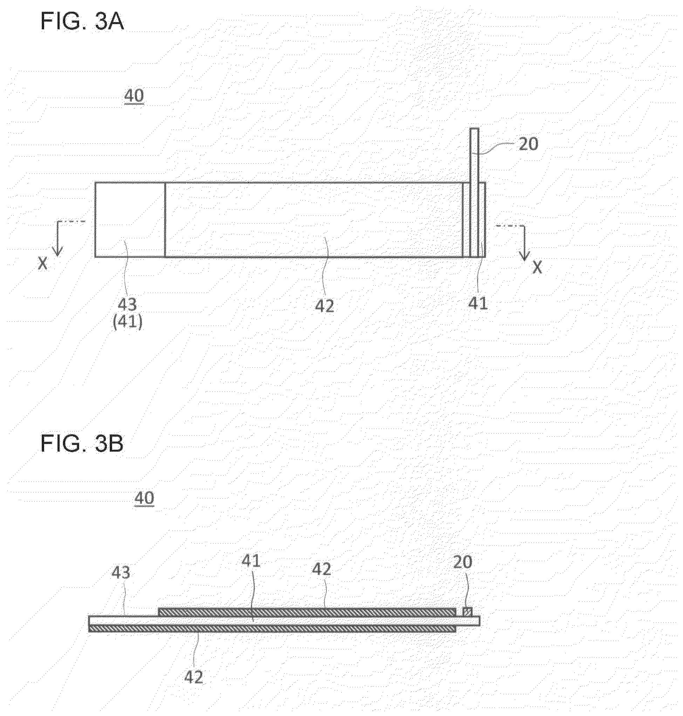

The belt-like negative electrode 40 constituting the electrode body 14 includes a negative electrode current collector 41 (the current collector of the negative electrode) and a negative electrode active material layer 42 (the active material layer of the negative electrode) formed on the negative electrode current collector 41. As shown in Figs. 1 and 2, the negative electrode 40 is arranged on the outer circumferential surface of the electrode body 14 accommodated in the battery case, and the negative electrode current collector 41 is exposed and an exposed portion 43 in contact with the inner circumferential surface of the battery case is provided on the side of the outer circumferential surface of the negative electrode 40 provided on the outermost circumference. Figs. 3A-3B schematically show an exemplary configuration of the negative electrode 40. Fig. 3A is a plan view of one principal surface of the negative electrode 40, and Fig. 3B is a sectional view along a line X-X in Fig. 3A. As shown in Figs. 3A-3B, the negative electrode 40 includes the negative electrode current collector 41 and the negative electrode active material layer 42 formed on both surfaces of the negative electrode current collector 41. As shown in Figs. 3A and 3B, the exposed portion 43 provided in the negative electrode 40 is provided on one principal surface of the negative electrode 40 and at one longitudinal end located in the outermost circumferential portion of the electrode body 14.

By providing the exposed portion 43 on the outer circumferential surface of the electrode body 14 and placing it in contact with the inner circumferential surface of the battery case that also serves as the negative electrode terminal, electrical conduction between the negative electrode 40 and the battery case is achieved. Since the exposed portion 43 of the negative electrode 40 is placed in extensive surface contact with the inner peripheral surface of the battery case, the internal resistance of the battery 10 can be reduced. As a result, a battery with excellent large current discharge characteristics can be realized, and a highly safe battery can be realized because current constriction in the event of an external short circuit can be prevented.

As shown in Figs. 1 to 3A-3B, a portion in which both surfaces of the negative electrode current collector 41 are exposed is formed in the innermost circumferential portion of the negative electrode 40, and a negative electrode lead 20 is connected to the portion. The negative electrode lead 20 is connected to the inner surface of the bottom of the case body 15 by welding, etc. By providing the negative electrode lead 20 apart from the exposed portion 43 connected to the inner circumferential surface of the battery case and connecting the negative electrode lead 20 to the battery case, the current collection efficiency can be increased and the internal resistance of the battery can be further reduced. Further, dispersion of a short circuit current can suppress local heat generation and prevent an internal short circuit due to separator melting in the event an external short circuit. The position in the negative electrode 40 in which the negative electrode lead 20 is provided is not limited to the innermost circumferential portion (the longitudinal end opposite to the exposed portion 43 in Figs. 3A-3B). Further, it is not necessary to provide the negative electrode lead 20 in the negative electrode 40.

Further, as shown in Figs. 1 to 3A-3B, the negative electrode active material layer 42 is formed on the principal surface of the negative electrode 40 opposite to the exposed portion 43 of the negative electrode current collector 41. This causes the negative electrode active material layer 42 to face the positive electrode active material layer 32 of the positive electrode 30, thereby increasing the capacity of the battery. Moreover, the strength of the region of the negative electrode 40 in which the exposed portion 43 is formed can be maintained, thereby making it easy to accommodate the electrode body 14 in the case body 15.

### (2) Steps of manufacturing electrode plate

Hereinafter, steps of manufacturing the negative electrode 40, which is the negative electrode plate, will be described. In the negative electrode 40, it is necessary to expose the copper foil. When the lithium foil is pressure bonded to the copper foil intermittently, the lithium foil is prone to wrinkles due to a difference in degree of elongation between the lithium foil and the copper foil. In this embodiment, the lithium foil is pressure-bonded to one front surface of the copper foil and is then bent at a position displaced from the central position in one direction to form a metallic lithium layer on both surfaces of the copper foil and, at the same time, form a portion where the copper foil is exposed.

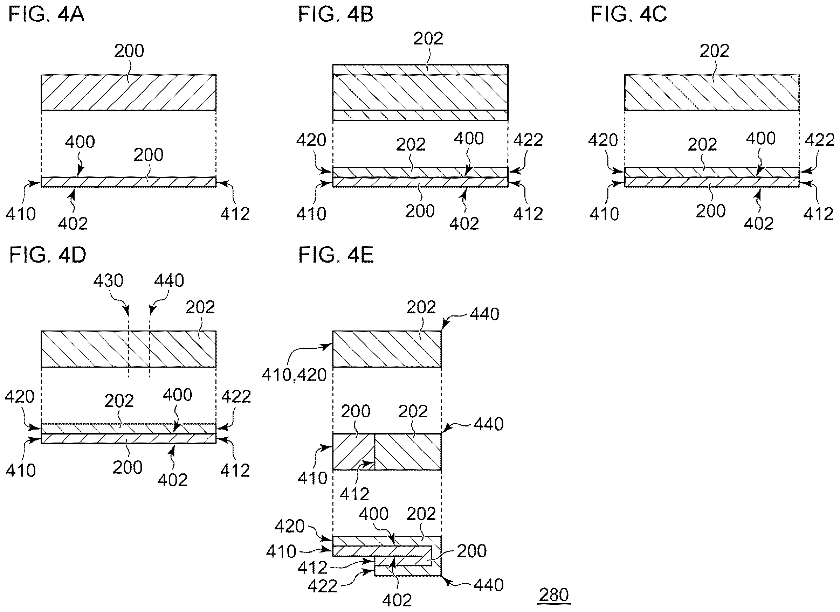

Figs. 4A-4E show steps of manufacturing an electrode plate 280. Fig. 4A shows a first metal foil 200. The upper part of Fig. 4A is a top view, and the lower part of Fig. 4A is a side view. The first metal foil 200 is a copper foil (about 13 um) which will be the negative electrode current collector 41. The first metal foil 200 has a first surface 400 facing upward and a second surface 402 opposite to the first surface 400 and facing downward. In the horizontal direction of the first metal foil 200, a first end 410 is arranged at the left-side edge and a second end 412 is arranged at the right-side edge.

Fig. 4B shows a step that follows the step of Fig. 4A. The upper part of Fig. 4B is a top view, and the lower row of Fig. 4B is a side view. A laminated body is formed by stacking the second metal foil 202 on the first surface 400 of the first metal foil 200. The second metal foil 202 is a lithium foil (about 10 um) which will be the negative electrode active material layer 42. In the horizontal direction of the second metal foil 202, a third end 420 is arranged at the left-side edge and a fourth end 422 is arranged at the right-side edge. When the first metal foil 200 and the second metal foil 202 are stacked, the second end 412 of the first metal foil 200 and the fourth end 422 of the second metal foil 202 are aligned, and the first end 410 of the first metal foil 200 and the third end 420 of the second metal foil 202 are also aligned. It will be noted that the width of the second metal foil 202 is larger than the width of the first metal foil 200.

Fig. 4C shows a step that follows the step of Fig. 4B. The upper part of Fig. 4C is a top view, and the lower part of Fig. 4C is a side view. As described above, since the width of the second metal foil 202 is larger than the width of the first metal foil 200, a portion of the second metal foil 202 is cut to cause the width of the second metal foil 202 to match the width of the first metal foil 200.

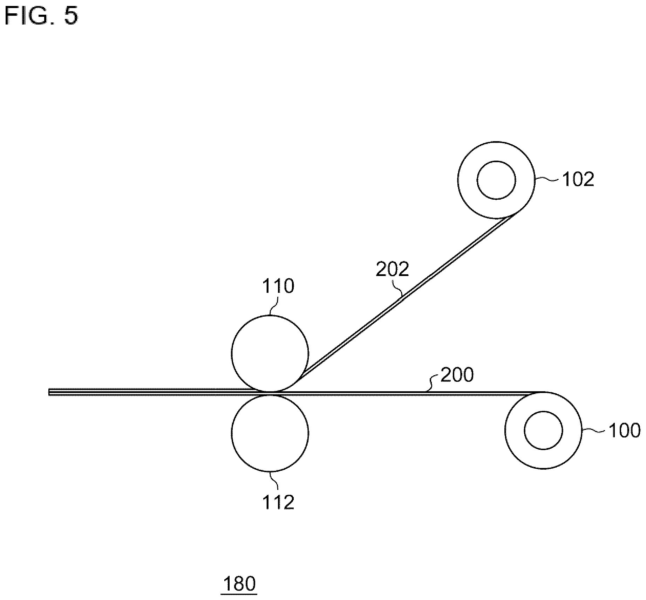

Hereinafter, manufacturing of the laminated body of Figs. 4B-4C will be described in more detail. Fig. 5 is a side view showing a structure of a manufacturing apparatus 180 for the manufacturing in Figs. 4B-4C. A first metal foil roll member 100 has the first metal foil 200 wrapped around it. A second metal foil roll member 102 has the second metal foil 202 wrapped around it.

The first metal foil 200 is drawn from the first metal foil roll member 100, and the second metal foil 202 is drawn from the second metal foil roll member 102. The first metal foil 200 and the second metal foil 202 travel toward a first pressure bonding roller 110 and a second pressure bonding roller 112 forming a pair of pressure bonding rollers. In that process, the second metal foil 202 and the first metal foil 200 are stacked from top to bottom in that order.

The first pressure bonding roller 110 and the second pressure bonding roller 112 are arranged in the vertical direction. To describe it specifically, the first pressure bonding roller 110 is provided on the side of the second metal foil 202, and the second pressure bonding roller 112 is provided on the side of the first metal foil 200. The first metal foil 200 and the second metal foil 202 stacked are inserted between the first pressure bonding roller 110 and the second pressure bonding roller 112. The first pressure bonding roller 110 and the second pressure bonding roller 112 have a cylindrical shape and are rotatable. The first metal foil 200 and the second metal foil 202 are pressure bonded by the rotation of the first pressure bonding roller 110 and the second pressure bonding roller 112. A laminated body comprised of the first metal foil 200 and the second metal foil 202 thus pressure bonded is cut as shown in Fig. 4B.

Fig. 4D shows a step that follows the step of Fig. 4C. The upper part of Fig. 4D is a top view, and the lower row of Fig. 4D is a side view. The center between the first end 410 and the second end 412 of the first metal foil 200 is indicated as a central position 430. Further, a bending point 440 is arranged between the central position 430 and the second end 412.

Fig. 4E shows a step that follows Fig. 4D. The upper part of Fig. 4E is a top view, the middle part of Fig. 4E is a bottom view, and the lower part of Fig. 4E is a side view. The first metal foil 200 and the second metal foil 202 are bent at the bending point 440 to place the second surface 402 of the first metal foil 200 in contact. That is, the first metal foil 200 and the second metal foil 202 are bent so that the second end 412 and the fourth end 422 are guided downward. On the lower surface, the second surface 402 of the first metal foil 200 is exposed between the first end 410 and the second end 412. On the upper surface, on the other hand, the first surface 400 of the first metal foil 200 is not exposed. Fig. 4E show the electrode plate 280, which is used, for example, as the negative electrode 40.

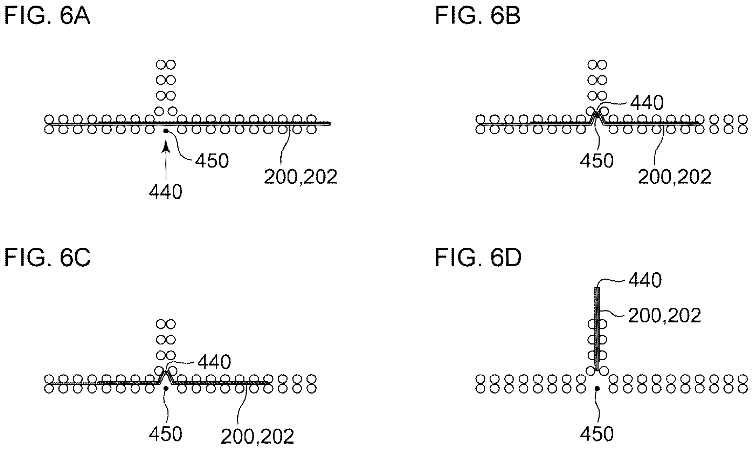

Figs. 6A-6D show the manufacturing steps of Fig. 4E. Fig. 6A shows the laminated body of the first metal foil 200 and the second metal foil 202 and the bending point 440 in the laminated body. Further, a pin 450 is arranged in the vicinity of the bending point 440. Referring to Fig. 6B, the pin 450 pushes up the bending point 440 as the pin 450 is elevated. Therefore, the laminated body of the first metal foil 200 and the second metal foil 202 is elevated from the bending point 440. Referring to Fig. 6C, the pin 450 returns to its original position. The bending point 440 remains elevated. Referring to Fig. 6D, the laminated body of the first metal foil 200 and the second metal foil 202 is pulled up from the bending point 440.

According to this embodiment, the second metal foil 202 is stacked on the first surface 400 of the first metal foil 200 and then the first metal foil 200 and the second metal foil 202 are bent at the bending point 440 to place the second surface 402 in contact. It is therefore possible to expose the first metal foil 200 by a simple configuration. Further, since the first metal foil 200 is exposed by a simple configuration, the electrode plate 280 that is difficult to wrinkle can be provided. Further, since the second end 412 of the first metal foil 200 and the fourth end 422 of the second metal foil 202 are aligned, it is ensured that the first metal foil 200 is exposed on the side of one surface, and the first metal foil 200 is not exposed on the side of the opposite surface. Further, the exposed area of the first metal foil 200 can be adjusted by adjusting the position of the bending point 440. Further, since the exposed area of the first metal foil 200 is adjusted, design changes can be made easily.

### (Embodiment 2)

A description will now be given of embodiment 2. In the electrode plate 280 according to embodiment 1, the first metal foil 200 is exposed through the second metal foil 202 on the side of one surface, and the surface on the opposite side is covered only with the second metal foil 202. When the second metal foil 202 contains a surplus portion, the surplus portion narrows the space that remains in the battery 10. The description below highlights a difference from embodiment 1.

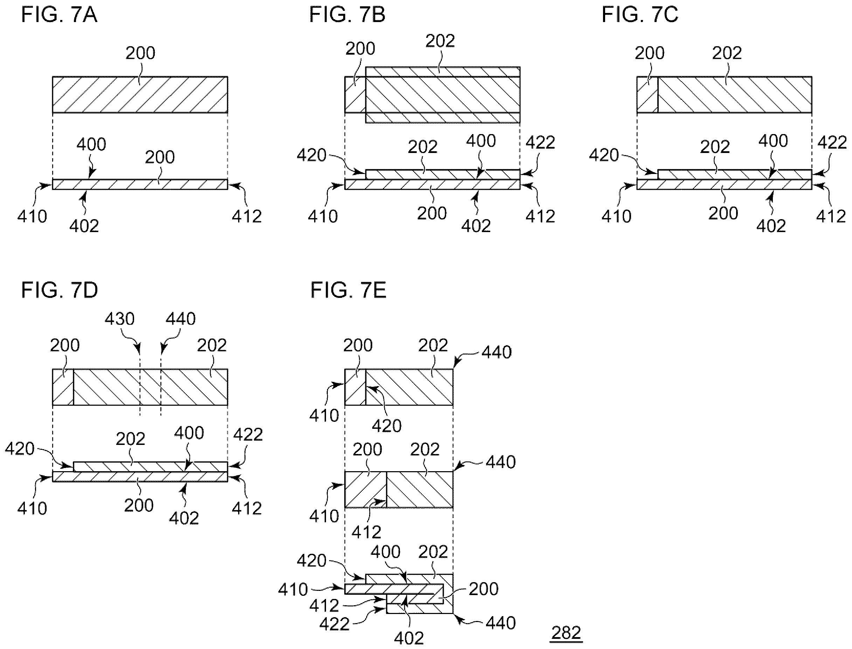

Figs. 7A-7E show steps of manufacturing an electrode plate 282. Fig. 7A is identical to Fig. 4A. Fig. 7B shows a step that follows the step of Fig. 7A. The upper part of Fig. 7B is a top view, and the lower part of Fig. 7B is a side view. A laminated body is formed by stacking the second metal foil 202 on the first surface 400 of the first metal foil 200. When the first metal foil 200 and the second metal foil 202 are stacked, the second end 412 of the first metal foil 200 and the fourth end 422 of the second metal foil 202 are aligned. Further, the third end 420 of the second metal foil 202 is aligned with a position more toward the second end 412 than the first end 410 of the first metal foil. As described above, the width of the second metal foil 202 is larger than the width of the first metal foil 200.

Fig. 7C shows a step that follows the step of Fig. 7B. The upper part of Fig. 7C is a top view, and the lower part of Fig. 7C is a side view. As described above, since the width of the second metal foil 202 is larger than the width of the first metal foil 200, a portion of the second metal foil 202 is cut to cause the width of the second metal foil 202 to match the width of the first metal foil 200.

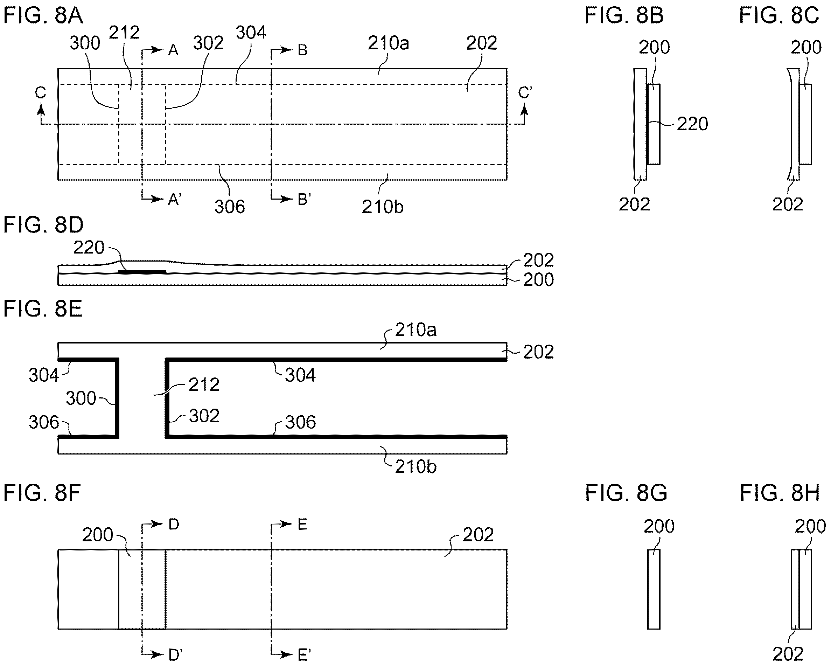

Figs. 8A-8H show a structure of the laminated body. Fig. 8A is a top view of the second metal foil 202 and the first metal foil 200 (not shown) pressure-bonded to each other as viewed from side of the second metal foil 202. A first boundary 300 and the second boundary 302 are formed.

An interval portion 212 is formed between the first boundary 300 and the second boundary 302. In the other portions, on the other hand, the foils are pressure bonded. The pressure bonding force in the interval portion 212 is weaker than the pressure bonding force in the portions other than the interval portion 212.

Fig. 8B is a sectional view in A-A' direction of Fig. 8A, i.e., a sectional view of the interval portion 212. A weakly pressure bonded portion 220 is provided between the first metal foil 200 and the second metal foil 202. The weakly pressure bonded portion 220 is a portion with a weak pressure bonding force.

As shown in Fig. 8A, a portion of the second metal foil 202 in contact with one end of the first metal foil 200 is a third boundary 304, and a portion in contact with another end of the first metal foil 200 is a fourth boundary 306. A portion outside the third boundary 304 is a first surplus portion 210a, and a portion outside the fourth boundary 306 is a second surplus portion 210b. The first surplus portion 210a and the second surplus portion 210b are collectively referred to as a surplus portion 210. The surplus portion 210 is a portion protruding from the first metal foil 200 and is a portion that does not adhere to the first metal foil 200.

Fig. 8D is a sectional view in B-B' direction of Fig. 8A. The first metal foil 200 and the second metal foil 202 are stacked, and the weakly pressure bonded portion 220 is not provided. Fig. 8D is a sectional view in C-C' direction of Fig. 8A. As described above, the weakly pressure bonded portion 220 is provided only in the interval portion 212, and the weakly pressure bonded portion 220 is not provided in the portions other than the interval portion 212.

Fig. 8E shows a portion peeled off from the second metal foil 202. As shown, the surplus portion 210 and the interval portion 212 are peeled off. Fig. 8F shows the electrode plate 280 which is laminated body that remains when the second metal foil 202 as shown in Fig. 8E has been peeled off. The first metal foil 200 is exposed through a portion of the second metal foil 202. Fig. 8G is a D-D' sectional view of Fig. 8F and includes only the first metal foil 200. Fig. 8H is an E-E' sectional view of Fig. 8F showing the first metal foil 200 and the second metal foil 202 laminated. The laminated obtained by cutting the plate into a plurality of pieces is shown in Fig. 7C.

Fig. 7D shows a step that follows the step of Fig. 7C. The upper part of Fig. 7D is a top view, and the lower row of Fig. 7D is a side view. The center between the first end 410 and the second end 412 of the first metal foil 200 is indicated as the central position 430. Further, the bending point 440 is arranged between the central position 430 and the second end 412.

Fig. 7E shows a step that follows the step of Fig. 7D. The upper part of Fig. 7E is a top view, the middle part of Fig. 7E is a bottom view, and the lower part of Fig. 7E is a side view. The first metal foil 200 and the second metal foil 202 are bent at the bending point 440 to place the second surface 402 of the first metal foil 200 in contact. That is, the first metal foil 200 and the second metal foil 202 are bent so that the second end 412 and the fourth end 422 are guided downward. On the lower surface, the second surface 402 of the first metal foil 200 is exposed between the first end 410 and the second end 412. Further, on the upper surface, the first surface 400 of the first metal foil 200 is exposed between the first end 410 and the third end 420. Fig. 7E show the electrode plate 282, which is used, for example, as the negative electrode 40.

According to this embodiment, the third end 420 of the second metal foil 202 is aligned with a position more toward the second end 412 than the first end 410 of the first metal foil 200 to expose the first metal foil 200 between the first end 410 and the third end 420 so that the electrode plate 282 in which the first metal foil 200 is exposed on both surfaces can be provided.

The embodiments of the present disclosure are described above in detail. The embodiments described above are merely specific examples of practicing the present disclosure. The details of the embodiments shall not be construed as limiting the technical scope of the present disclosure. A number of design modifications such as modification, addition, deletion, etc. of constituting elements may be made to the extent that they do not depart from the idea of the present disclosure defined by the claims. New embodiments with design modifications will provide the combined advantages of the embodiment and the variation. Although the details subject to such design modification are emphasized in the embodiment described above by using phrases such as "of this embodiment" and "in this embodiment", details not referred to as such are also subject to design modification. Any combination of constituting elements included in the respective embodiments is also useful as an embodiment of the present disclosure. Hatching in the section in the drawings should not be construed as limiting the material of the hatched object.

The embodiments may be defined by the following items.

### [Item 1]

An electrode plate (280, 282) including:
a first metal foil (200) having a first surface (400) and a second surface (402) facing a direction opposite to that of the first surface (400), a first end (410) and a second (412) being arranged at ends of the first metal foil (200) in one direction; and
a second metal foil (202) in which a third end (420) and a fourth end (422) are arranged at ends of the second metal foil (202) in the one direction,
wherein the second end (412) of the first metal foil (200) is aligned with the fourth end (422) of the second metal foil (202), and the second metal foil (202) is stacked on the first surface (400) of the first metal foil (200),
wherein a bending point (440) is arranged between i) a central position (430) between the first end (410) and the second end (412) of the first metal foil (200) and ii) the second end (412), and the first metal foil (200) and the second metal foil (202) are bent at the bending point (440) to place the second surface (402) of the first metal foil (200) in contact, and
wherein the second surface (402) of the first metal foil (200) is exposed between the first end (410) and the second end (412).

### [Item 2]

The electrode plate (280) according to Item 1,
wherein the first end (410) of the first metal foil (200) and the third end (420) of the second metal foil (202) are aligned, and the second metal foil (202) is stacked on the first surface (400) of the first metal foil (200), and
wherein the first surface (400) of the first metal foil (200) is not exposed.

### [Item 3]

The electrode plate (282) according to Item 1,
wherein the third end (420) of the second metal foil (202) is aligned with a position more toward the second end (412) than the first end (410) of the first metal foil (200), and the second metal foil (202) is stacked on the first surface (400) of the first metal foil (200), and
wherein the first surface (400) of the first metal foil (200) is exposed between the first end (410) and the third end (420).

### [Item 4]

A method of manufacturing an electrode plate (280, 282), including:
forming, given i) a first metal foil (200) having a first surface (400) and a second surface (402) facing a direction opposite to that of the first surface (400), a first end (410) and a second (412) being arranged at ends of the first metal foil (200) in one direction and ii) a second metal foil (202) in which a third end (420) and a fourth end (422) are arranged at ends of the second metal foil (202) in the one direction, a laminated body in which the second end (412) of the first metal foil (200) is aligned with the fourth end (422) of the second metal foil (202), and the second metal foil (202) is stacked on the first surface (400) of the first metal foil (200); and
bending, given that a bending point (440) is arranged between i) a central position (430) between the first end (410) and the second end (412) of the first metal foil (200) and ii) the second end (412), the first metal foil (200) and the second metal foil (202) at the bending point (440) to place the second surface (402) of the first metal foil (200) in contact.

### [Item 5]

The method of manufacturing an electrode plate (280) according to Item 4,
wherein, in the forming of the laminated body, the first end (410) of the first metal foil (200) and the third end (420) of the second metal foil (202) are aligned, and the second metal foil (202) is stacked on the first surface (400) of the first metal foil (200).

### [Item 6]

The method of manufacturing an electrode plate (280) according to Item 4,
wherein, in the forming of the laminated body, the third end (420) of the second metal foil (202) is aligned with a position more toward the second end (412) than the first end (410) of the first metal foil (200), and the second metal foil (202) is stacked on the first surface (400) of the first metal foil (200).

### INDUSTRIAL APPLICABILITY

According to the present disclosure, it is possible to provide an electrode plate that is difficult to wrinkle.

### REFERENCE SIGNS LIST

10 battery, 14 electrode body, 15 case body, 16 sealing body, 17, 18, insulating plate, 19 positive electrode lead, 20 negative electrode lead, 21 overhang, 22a filter opening, 22 filter, 23 lower valve body, 24 insulating member, 25 upper valve body, 26a cap opening, 27 gasket, 30 positive electrode, 21 positive electrode current collector, 32 positive electrode active material layer, 40 negative electrode, 41 negative electrode current collector, 42 negative electrode active material layer, 43 exposed portion, 50 separator, 100 first metal foil roll member, 102 second metal foil roll member, 110 first pressure bonding roller, 112 second pressure bonding layer, 180 manufacturing apparatus, 200 first metal foil, 202 second metal foil, 210 surplus portion, 212 interval portion, 220 weakly pressure bonded portion, 280, 282 electrode plate, 300 first boundary, 302 second boundary, 304 third boundary, 306 fourth boundary, 400 first surface, 402 second surface, 410 first end, 412 second end, 420 third end, 422 fourth end, 430 central position, 440 bending point, 450 pin

## Claims

1. An electrode plate comprising:
a first metal foil having a first surface and a second surface facing a direction opposite to that of the first surface, a first end and a second being arranged at ends of the first metal foil in one direction; and
a second metal foil in which a third end and a fourth end are arranged at ends of the second metal foil in the one direction,
wherein the second end of the first metal foil is aligned with the fourth end of the second metal foil, and the second metal foil is stacked on the first surface of the first metal foil,
wherein a bending point is arranged between i) a central position between the first end and the second end of the first metal foil and ii) the second end, and the first metal foil and the second metal foil are bent at the bending point to place the second surface of the first metal foil in contact, and
wherein the second surface of the first metal foil is exposed between the first end and the second end.

2. The electrode plate according to Claim 1,
wherein the first end of the first metal foil and the third end of the second metal foil are aligned, and the second metal foil is stacked on the first surface of the first metal foil, and
wherein the first surface of the first metal foil is not exposed.

3. The electrode plate according to Claim 1,
wherein the third end of the second metal foil is aligned with a position more toward the second end than the first end of the first metal foil, and the second metal foil is stacked on the first surface of the first metal foil, and
wherein the first surface of the first metal foil is exposed between the first end and the third end.

4. A method of manufacturing an electrode plate, comprising:
forming, given i) a first metal foil having a first surface and a second surface facing a direction opposite to that of the first surface, a first end and a second being arranged at ends of the first metal foil in one direction and ii) a second metal foil in which a third end and a fourth end are arranged at ends of the second metal foil in the one direction, a laminated body in which the second end of the first metal foil is aligned with the fourth end of the second metal foil, and the second metal foil is stacked on the first surface of the first metal foil; and
bending, given that a bending point is arranged between i) a central position between the first end and the second end of the first metal foil and ii) the second end, the first metal foil and the second metal foil at the bending point to place the second surface of the first metal foil in contact.

5. The method of manufacturing an electrode plate according to Claim 4,
wherein, in the forming of the laminated body, the first end of the first metal foil and the third end of the second metal foil are aligned, and the second metal foil is stacked on the first surface of the first metal foil.

6. The method of manufacturing an electrode plate according to Claim 4,
wherein, in the forming of the laminated body, the third end of the second metal foil is aligned with a position more toward the second end than the first end of the first metal foil, and the second metal foil is stacked on the first surface of the first metal foil.
